# EUROPÄISCHE PATENTANMELDUNG

(11) **EP 0 523 674 A1**
(43) Veröffentlichungstag der Anmeldung: **20.01.1993**
(21) Anmeldenummer: 92112103.4
(22) Anmeldetag: 15.07.1992
(51) Int. Cl.: H01S 3/03

(54) **Slab- oder Bandleiterlaser für hohe Laserleistungen**

(30) Priorität: 18.07.1991 DE 4123899
(71) Anmelder: SIEMENS AKTIENGESELLSCHAFT, D-80333 München (DE)
(72) Erfinder: Krüger, Hans, Dipl.-Phys., W-8000 München 83 (DE); Seiffarth, Werner, Dipl.-Ing., W-8202 Bad Aibling (DE)

(57) **Zusammenfassung**

Bei einem Bandleiterlaser für hohe Laserleistungen, welche zwei einander im konstanten Abstand gegenüberliegende und einen Gasentladungsraum begrenzende Elektroden (1, 2) enthält, wird der Abstand zwischen den Elektroden (1, 2) auch bei wechselnden mechanischen Beanspruchungen während des Betriebes sehr genau eingehalten, ohne daß die Strahlqualität des ausgekoppelten Strahles unzulässig herabgesetzt wird, indem zwischen den Elektroden zumindest ein Abstandshalter (6) aus einem hochohmigen Material angeordnet ist, welcher nur einen kleinen Teil des Volumens des Gasentladungsraums einnimmt und dessen Gestalt und/oder Material so gewählt sind, daß die Intensität und die Qualität des ausgekoppelten Strahles nicht unzulässig beeinflußt wird.

Die Erfindung eignet sich insbesondere für CO₂-Wellenleiterlaser

## Beschreibung

Die Erfindung betrifft einen Slab- oder Bandleiterlaser nach dem Oberbegriff des Patentanspruchs 1. Ein derartiger Laser ist aus der DE-OS 37 29 053 bekannt.

Die Aufgabe, die der vorliegenden Erfindung zugrundeliegt, besteht in einer Steigerung der mit einem derartigen Laser erreichbaren Laserleistung bei hoher Qualität des ausgekoppelten Laserstrahles und bei gleichzeitig geringem konstruktivem Aufwand und Kostenaufwand.

Zur Erzielung einer Laserstrahlqualität, einer optimalen Leistung und einer zeitlichen Konstanz der Laserleistung auch bei Pulsbetrieb ist eine sehr präzise Parallelführung der beiden Wellenleiterflächen notwendig. Die Änderung der Parallelität darf beispielsweise bei einer Leistung von 200W nur etwa 0,01mm betragen. Diese hohe Genauigkeit muß auch bei Druckschwankungen im Gasentladungsraum, die bei Lasern im Pulsbetrieb auftreten, erhalten bleiben. Sonst tritt durch Anschwingen anderer longitudinaler Moden eine Verschlechterung der Strahlqualität auf, was insbesondere die Fokussierbarkeit des Laserstrahles negativ beeinflußt. Außerdem soll eine Herabsetzung der Laserleistung soweit als möglich vermieden werden.

Diese Aufgabe in allen ihren Ausgestaltungen wird durch die kennzeichnenden Merkmale des Patentanspruchs 1 gelöst. Gemäß einer Erkenntnis, die der Erfindung zugrundeliegt, stört ein Abstandsnalter im Entladungskanal nicht, wenn er nur eine geringe Ausdehnung quer zur Laufrichtung des Laserlichtes besitzt und/oder aus einem für das Laserlicht durchlässigen Material bersteht. Dabei darf die Breite des Abstandshalters bis zu 10% von der Breite des laseraktiven Gasentladungsraumes ausmachen.

Bei einem erfindungsgemäßen CO₂-Laser besteht der Abstandshalter vorteilhaft aus einem der Werkstoffe Si, Ge, GaAs, ZnSe, wobei diese Werkstoffe für die Laserstrahlung von 10,6µ durchlässig sind.

Ein Abstandshalter braucht nicht für das Laserlicht durchlässig zu sein, wenn seine Ausdehnung in Strahlrichtung besonders schmal ausgebildet ist, insbesondere 2% der Breite des laseraktiven Gasentladungsraumes nicht überschreitet.

Der Abstandshalter ist bevorzugt im Bereich des Flächenschwerpunktes der Elektroden angeordnet. Dadurch entsteht eine optimale Dämpfung von Schwingungen und Resonanzeffekten, die bei einem Impulsbetrieb im Laser auftreten können.

Ein Abstandshalter der beschriebenen Art führt grundsätzlich wegen seiner im Vergleich zum Plasma höheren Dielektrizitätkonstante zu einer Feldstärkeüberhöhung in seiner Nachbarschaft. Um die erreichbare Laserleistung voll auszuschöpfen, muß diese Feldstärkeüberhöhung vermindert oder vermieden werden. Hierzu sind die Elektroden vorteilhaft mit Ausnehmungen versehen und die Abstandshalter in den Ausnehmungen derart befestigt, daß im Bereich der Wellenleiterflächen der Elektroden ein Abstand zwischen dem Abstandshalter und den Elektroden besteht. Dabei sind die Elektroden vorteilhaft mit durchgehenden Ausnehmungen versehen, wobei diese Ausnehmungen durch Abschlußplatten, die auf den vom Gasentladungsspalt abgewandten Oberflächen angebracht sind, zumindest teilweise abgeschlossen sind und wobei der Abstandshalter an diesen Abschlußplatten abgestützt ist. Bei dieser Ausführungsform können zusätzlich Schwingungen durch akustische Resonanzen im Gasentladungsraum gedämpft oder vermieden werden, indem die Abstandsplatten Ausnehmungen besitzen und an ein Gasvorratsgefäß angrenzen. Hierdurch entsteht ein Druckausgleich mit dem Gasvorratsgefäß, welcher die Schwingungen des im Entladungsspalt befindlichen Gases dämpft.

Die Erfindung wird nun anhand von drei Figuren erläutert. Sie ist nicht auf die in den Figuren gezeigten Beispiele beschränkt.
- FIG 1: zeigt einen erfindungsgemäßen Bandleiterlaser schematisch in Draufsicht, wobei die obere Elektrode weggelassen wurde.
- FIG 2: zeigt einen Schnitt durch den Laser von FIG 1 im teilweise gebrochener Darstellung.
- FIG 3: zeigt ein zweites Ausführungsbeispiel in einem zur FIG 2 analogen Schnitt in gebrochener Darstellung.

Zwei Elektroden 1 und 2 sind beispielsweise durch Seitenwände 15 aus isolierendem Material (z.B. Keramik) in einem genau definierten gegenseitigen Abstand gegeneinander fixiert. Um die gegenseitige Lage der Elektroden 1 und 2 auch unter Betriebsbedingungen, bei Temperaturschwankungen und bei mechanischen Belastungen über den ganzen Bereich der Elektroden zu erhalten, ist im Entladungsraum zwischen diesen Elektroden ein Abstandshalter 6 angeordnet. Der Abstandshalter 6 überdeckt den Flächenschwerpunkt der Elektroden 1 und 2. Spiegel 3 und 4 bilden einen instabilen Resonator und vervollständigen zusammen mit dem Strahlaustrittsfenster 5 den Laser.

Die dem Gasentladungsraum 14 zugewandten Flächen der Elektroden 1 bzw. 2 stellen Wellenleiterflächen 16 und 17 für das Laserlicht dar. Bereits geringfügige Abweichungen von der Parallelität dieser Flächen setzen die Laserleistung merklich herab. Änderungen in der Parallelität der Elektroden führen zu Änderungen der Strahlqualität. Bei Wechselbeanspruchung entstehen dadurch Intensitätsschwankungen in der Laserleistung und der Strahlqualität, die in der Praxis unzulässig sind. Diese Effekte werden durch den Abstandshalter 6 gedämpft und weitgehend aufgehoben. Bei Bedarf können auch mehrere Abstandshalter 6 über die Elektrodenfläche verteilt angeordnet sein.

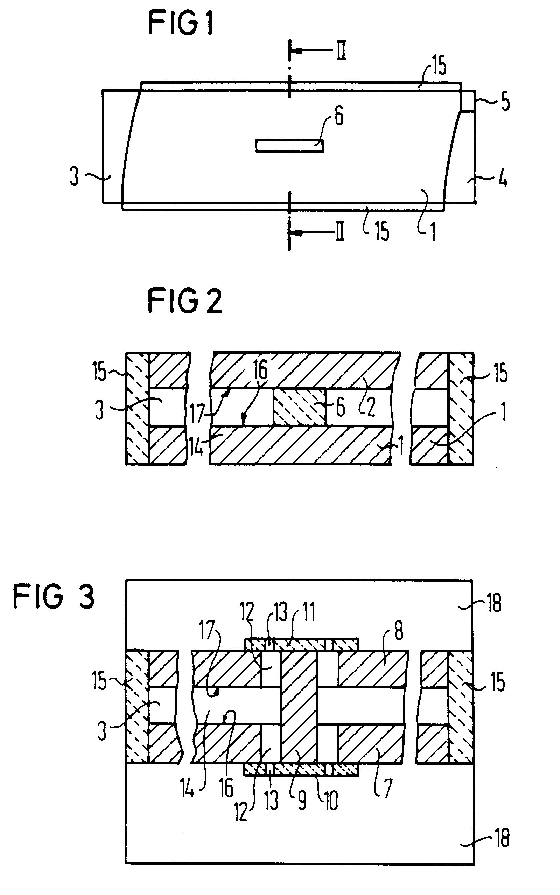

In der Ausführungsform der FIG 3 weisen Elektroden 7 und 8 Ausnehmungen 12 auf, welche durch Abschlußplatten 10 bzw. 11 abgedeckt sind. Zwischen den Abschlußplatten 10 und 11 ist ein Abstandshalter 9 abgestützt, welcher im Bereich der Wellenleiterflächen 16 bzw. 17 zu den Elektroden 7 bzw. 8 einen Abstand aufweist. Dadurch wird eine Feldüberhöhung im Bereich um den Abstandshalter 9 vermieden, welche auftreten könnte, da die Dielektrizitätskonstante im Abstandshalter grundsätzlich erheblich höher ist, als im angrenzenden Entladungsraum. Infolgedessen ermöglicht diese Ausführungsform die volle Ausnützung der Spannungsfestigkeit und damit eine maximale Energieeinkopplung in den Gasentladungsraum. Die Abschlußplatten 10 und 11 weisen Ausnehmungen 13 auf, welche jeweils in einen schematisch dargestellten Vorratsbehälter 18 einmünden und somit einen Druckausgleich mit diesem Behälter ermöglichen, wenn beispielsweise infolge von Schwingungen im Plasma Druckunterschiede entstehen. Dadurch werden beispielsweise akustische Resonanzen im Plasma gedämpft bzw. vermieden.

Eine sehr gleichmäßige, ungestörte Feldverteilung und eine volle Ausnutzung der Elektrodenfläche wird erreicht, indem der Abstandshalter aus Metall besteht, indem die Abschlußplatten aus Keramik bestehen und indem der elektrische Widerstand und die elektrische Kapazität zwischen jeder der beiden Elektroden und dem Abstandshalter so weit aneinander angenähert sind, daß die sich beim Betrieb am Abstandshalter einstellende Spannungsdifferenz gegenüber jeder der beiden Elektroden unter der Plasma-Brennspannung liegt. In diesem Fall kann der Abstand zwischen dem Abstandshalter und den Elektroden besonders klein gehalten werden.

## Patentansprüche

1. Slab- oder Bandleiterlaser für hohe Laserleistung, welcher zwei einander in konstantem Abstand gegenüberliegende und einen Gasentladungsraum begrenzende Elektroden enthält, wobei die an den Gasentladungsraum angrenzenden Oberflächen der Elektroden als Wellenleiterflächen ausgebildet sind, **dadurch gekennzeichnet,** daß zwischen den Elektroden zumindest ein Abstandshalter aus einem hochohmigen Material angeordnet ist, welcher nur einen kleinen Teil des Volumens des Gasentladungskanales einnimmt und dessen Gestalt und/oder Material so gewählt sind, daß die Intensität und die Qualität des ausgekoppelten Strahles nicht unzulässig beeinflußt werden.

2. Laser nach Anspruch 1, **dadurch gekennzeichnet,** daß der Abstandshalter aus einem für die Laserstrahlung durchlässigen Material besteht.

3. Laser nach Anspruch 2, **dadurch gekennzeichnet,** daß er ein CO₂-Laser ist und daß der Abstandshalter aus einem der Werkstoffe Si, Ge, GaAs besteht.

4. Laser nach einem der Ansprüche 1 bis 3, **dadurch gekennzeichnet,** daß der Abstandshalter in Strahlrichtung besonders schmal ausgebildet ist, insbesondere nicht breiter als 10% der Breite des Entladungskanals ist.

5. Laser nach einem der Ansprüche 1 bis 4, **dadurch gekennzeichnet,** daß die Elektroden mit Ausnehmungen versehen sind, daß der Abstandshalter in den Ausnehmungen der Elektroden derart befestigt ist, daß im Bereich der Wellenleiterflächen der Elektroden ein Abstand zwischen dem Abstandshalter und den Elektroden besteht.

6. Laser nach Anspruch 5**, dadurch gekennzeichnet,** daß die Elektroden mit durchgehenden Ausnehmungen versehen sind, daß diese Ausnehmungen durch Abschlußplatten, die auf den vom Gasentladungsspalt abgewandten Oberflächen angebracht sind, zumindest teilweise abgeschlossen sind und daß der Abstandshalter an diesen Abschlußplatten abgestützt ist.

7. Laser nach Anspruch 6, **dadurch gekennzeichnet,** daß die Abschlußplatten Ausnehmungen besitzen und an ein Gasvorratsgefäß angrenzen.

8. Laser nach Anspruch 6, **dadurch gekennzeichnet,** daß der Abstandshalter aus Metall besteht, daß die Abschlußplatten aus Keramik bestehen und daß der elektrische Widerstand und die Kapazität zwischen jeder der beiden Elektroden und dem Abstandshalter so weit aneinander angenähert sind, daß die sich beim Betrieb am Abstandshalter einstellende Spannungsdifferenz gegenüber jeder der beiden Elektroden unter der Plasma-Brennspannung liegt.

9. Laser nach Anspruch 1, **dadurch gekennzeichnet,** daß der Abstandshalter im Bereich des Flächenschwerpunktes der Elektroden angeordnet ist.
